Europäisches Patentamt

(19) European Patent Office

Office européen des brevets

(11) Numéro de publication : **0 437 405 A1**

## (12) DEMANDE DE BREVET EUROPEEN

(21) Numéro de dépôt : **91400053.4**

(22) Date de dépôt : **11.01.91**

(51) Int. Cl.$^5$ : **G01N 31/12**

(30) Priorité : **12.01.90 FR 9000312**

(43) Date de publication de la demande :
**17.07.91 Bulletin 91/29**

(84) Etats contractants désignés :
**AT BE CH DE DK ES FR GB GR IT LI LU NL SE**

(71) Demandeur : **SOCIETE NATIONALE ELF
AQUITAINE
Tour Elf, 2, Place de la Coupole, La Défense 6
F-92400 Courbevoie (FR)**

(72) Inventeur : **Bonometti, Guy
3, Impasse des Violettes
F-64300 Orthez (FR)**
Inventeur : **Olivier, Roland
70, rue Saint Gilles
F-64300 Orthez (FR)**
Inventeur : **Maurice, Jacques
103, Avenue de Trespoey
F-64000 Pau (FR)**

(74) Mandataire : **Clisci, Serge et al
S.A. FEDIT-LORIOT CONSEILS EN
PROPRIETE INDUSTRIELLE 38, avenue Hoche
F-75008 Paris (FR)**

(54) Procédé et appareil pour la détermination de l'azote total.

(57) Procédé de dosage de l'azote dans diverses matières azotées par combustion de celles-ci par passage, avec un gaz oxygéné, au contact d'une masse catalytique solide, métallique, de façon à convertir l'azote en NO. Celui-ci est ensuite dosé, de préférence par chimiluminescence ou par interférométrie optique.

Appareil comprenant un four (1,2,2') chargé de masse catalytique (4) qui peut être un fil servant de résistance chauffante, et d'une arrivée de l'oxygène (6). La masse catalytique est un métal en alliage inoxydable ferreux ou du groupe du Pt.

FIG_1

EP 0 437 405 A1

## PROCEDE ET APPAREIL POUR LA DETERMINATION DE L'AZOTE TOTAL

L'invention se rapporte au dosage rapide de l'azote total dans divers milieux, notamment dans des eaux résiduaires et autres. Elle comprend un nouveau procédé pour la conduite de telles analyses, ainsi qu'un appareil pour sa réalisation. Ces procédé et appareil sont particulièrement utiles au contrôle permanent de la pollution des eaux urbaines ou industrielles ; elle permet aisément d'apprécier des teneurs en azote total aussi faibles que, par exemple,100 ppb, avec une grande rapidité, quelle que soit la forme chimique sous laquelle se trouve cet azote.

La méthode classique, bien connue, qui donne des résultats précis et constants, est celle de KJELDAHL, basée sur l'attaque sulfurique de l'échantillon, puis titrage de l'ammoniaque dégagée à partir de la solution sulfurique, sous l'effet d'une base alcaline. Cependant, entre le moment de la prise d'échantillon et le résultat de l'analyse il s'écoule plusieurs heures, pendant lesquelles les opérations exigent l'intervention continuelle d'un manipulateur ; il n'est donc pas possible de mener un contrôle constant, fournissant des indications quantitatives à tout moment. Quant à la méthode qui consiste à opérer comme pour le dosage du carbone total, elle donne des résultats très variables, suivant la nature chimique des composés azotés en présence, dont certains lui échappent presque complètement ; tel est, par exemple, le cas des amino-alcools et amino-acides.

La présente invention apporte dans ce domaine un perfectionnement important, en permettant de suivre très rapidement la teneur en azote total d'un milieu donné ; les résultats sont aisément enregistrables et peuvent représenter des dizaines d'analyses par jour.

Le procédé suivant l'invention, qui comprend la combustion des matières azotées d'un échantillon, est caractérisé en ce qu'un échantillon des composés à doser, volatilisé, est passé au contact d'une ou de plusieurs masses catalytiques, métalliques, portées à température élevée, en présence de l'oxygène, de façon à convertir en NO les composés azotés de l'échantillon, et déterminer ensuite la quantité de NO formé, par un procédé connu en soi.

La nature et l'étendue de la surface métallique du catalyseur chauffé jouent un rôle important dans le procédé de l'invention : le métal est inoxydable, tel qu'acier Fe-Ni, Fe-Ni-Cr, contenant éventuellement du V, Mo, W, Co, Nb, Ti etc. La résistance chauffante peut être en W ou en alliage de ce métal, notamment avec un ou plusieurs des métaux sus-nommés. Conviennent bien les métaux du groupe du platine, Pt-Ir etc. et tout particulièrement le platine rhodié, par exemple 90% Pt-10% Rh, de préférence en fils servant de résistance chauffante.

Le procédé est mis en oeuvre de manière à ce que le contact avec la phase gazeuse, passée sur le catalyseur chauffé soit le plus intime possible ; pour cela il est préférable que l'épaisseur de la couche gazeuse, cheminant au contact du métal, ne dépasse pas 3 mm, et - le mieux - qu'elle soit comprise entre 0,3 mm et 2 mm, et particulièrement entre 0,5 et 1,5 mm.

La durée de contact entre le catalyseur et le flux gazeux, porteur des matières à analyser, à des températures de l'ordre de 800° à 1200°C, est en général de 0,2 à environ 3 secondes ; aux températures préférées de 900° à 1000°C, il est souhaitable que ce temps de contact soit de l'ordre de 0,5 sec à 2 sec et surtout de 0,5 à 1 sec.

Réciproquement, si l'on désire exécuter l'analyse, par exemple, en 10 à 30 sec, il convient que la surface de métal, en particulier PtRh, soit de 5 à40 cm², et de préférence de 7 à 9 cm².

Ainsi, conformément à l'invention, les composés azotés, quels qu'ils soient, sont convertis uniquement en NO, grâce à l'effet catalytique du métal sur lequel on les fait passer à température élevée. Suivant une forme d'exécution particulière, le chauffage peut être effectué par un moyen approprié, autre que le passage du courant dans le métal catalysant ; ou bien, ce chauffage externe est auxiliaire de celui que produit le métal catalyseur lui-même.

L'échantillon à analyser étant introduit dans l'espace catalysant, chaud, à l'état de solution, celle-ci peut être aqueuse ou organique ; autrement dit le ou les composés azotés sont en solution ou dispersion dans l'eau ou dans un solvant organique, par exemple alcool, cétone, ester, hydrocarbure ou autre, à l'exclusion - bien entendu - d'amines, amides et autres composés azotés. Dès son introduction dans la zone analytique, chaude, cette solution est évaporée et sa vapeur est entraînée par un courant d'air ou d'oxygène à travers une région catalytique, chauffée.L'entraînement à l'oxygène est particulièrement pratique.

Bien que le traitement de solutions aqueuses soit fort commode, surtout lorsqu'il s'agit du contrôle continu des eaux industrielles ou urbaines, l'invention s'applique également à des échantillons solides ou pâteux, pourvu qu'ils puissent être volatilisés à chaud, dans un courant de gaz oxygéné. Dans ce cas, l'échantillon solide est placé dans une nacelle à l'entrée d'un four approprié et soumis au courant gazeux, tout comme le sont les échantillons liquides.

Selon une forme d'exécution speciale de l'invention il est devenu possible de grandement améliorer la précision de l'analyse par l'adjonction d'un électrolyte à l'échantillon de matière à analyser. Plus particulièrement, la précision est augmentée par l'introduction d'un halogénure, notamment d'un fluorure, chlorure ou bromure de métal alcalin ou alcalino-terreux. Bien que la quantité d'électrolyte à utiliser ne soit pas critique, il est bon d'en ajouter environ 0,01 à 0,2 équivalent par litre de solution à analyser, la proportion préférée étant en général de l'ordre de 0,05 à 0,15 éq. Pour des raisons pratiques, conviennent particulièrement les sels tels que NaCl, KCl,CaCl$_2$ ou/et MgCl$_2$.Dans le cas du NaCl, d'excellents résultats sont obtenus avec 3 à 7 g par litre, bien qu'on puisse utiliser, avec succès, environ 1 à 10 g/l. Avec 5 g/l, dans le dosage d'amino-alcools en milieu aqueux, la précision des résultats s'est améliorée de ± 8% à ± 1,6% ce qui est remarquable vu les difficultés de détermination de ce genre de composés.

Les hydracides halogénés agissent également dans le sens de l'amélioration de la précision des mesures, mais - comme leur emploi entraine l'acidification du courant gazeux et la libération d'halogène, nocifs pour l'appareillage - il devient nécessaire d'effectuer une neutralisation subséquente. Il est donc bien plus pratique d'utiliser les sels neutres mentionnés plus haut.

Conformément à l'invention, après la conversion des composés azotés en oxyde NO, ce dernier est dosé par toute méthode connue en soi. Convient fort bien à cet effet la chimiluminescence produite par les réactions:

$$NO + O_3 \longrightarrow NO_2 + O_2 \ \ldots\ldots\ldots\ 90\ \%$$

$$NO_2^{\textbf{x}} + O_2 \ \ldots\ldots\ldots\ 10\ \%$$

$$NO_2^{\textbf{x}} \longrightarrow NO_2 + h\nu$$

utilisées dans l'appareil des Sociétés SERES et ENVIRONNEMENT S.A.
Une autre bonne méthode est basée sur l'interférométrie optique.(appareil SERES, licence ELF-ANVAR)
Ces méthodes étant connues dans l'art, il n'y a pas lieu de les décrire ici.

L'appareil suivant l'invention, qui comprend un four avec des moyens de chauffage à ou au-delà de 800°C, et des moyens de soufflage d'un gaz oxygéné dans ce four, est caractérisé en ce que le four contient une charge de catalyseur pour l'oxydation de composés azotés sélectivement en l'oxyde NO ; l'appareil comporte un dispositif pour le dosage du NO dans le gaz qui a traversé le four.

L'enceinte du four, généralement tubulaire, est en matière réfractaire, telle que porcelaine, alumine, quartz ou autre, ou bien en métal, par exemple acier inoxydable. Elle est chauffée extérieurement, à l'aide d'un enroulement électrique ou au gaz, intérieurement par une résistance ou baguette chauffante, ou - éventuellement - à la fois par l'extérieur et l'intérieur.

Une caractéristique essentielle de l'appareil étant la présence d'un catalyseur approprié sur le trajet du gaz passé dans le four, ce catalyseur est disposé dans l'enceinte du four,de façon à être en contact le plus intime possible avec le gaz. Ainsi, une masse catalytique peut remplir tout ou partie de l'enceinte ; elle peut être sous la forme de billes, anneaux, tournures, filaments ou autres pièces faites avec les différents métaux catalysants, indiqués plus haut.

Dans le cas particulier de chauffe à la fois externe et interne, des fils ou fibres de métal catalyseur peuvent entourer une baguette chauffante axiale.

Une forme d'exécution très intéressante, qui a donné des résultats remarquables, consiste à utiliser des fils de métal catalyseur à la fois comme catalyseur et comme résistance électrique chauffante. Elle a été particulièrement réussie avec du platine rhodié à 10 % Rh.

Une autre caractéristique de l'appareil de l'invention réside en une chambre de volatilisation prévue à l'entrée du four ; cette chambre est destinée à recevoir l'échantillon à analyser et à le porter à la température élevée à laquelle il devient entraînable par le courant de gaz oxygéné vers l'intérieur du four. De préférence, la chambre de volatilisation possède un système de chauffage indépendant de celui du reste du four, et - par conséquent - réglable séparément.

Dans le cas mentionné plus haut, où la résistance chauffante elle-même sert de masse catalysante, des spires séparées, logées dans la chambre de volatilisation, servent à porter à la température adéquate l'échantillon introduit dans cette chambre. Lorsque l'échantillon est une solution, aqueuse ou organique, une forme de réalisation selon l'invention prévoit une tubulure au droit de la chambre de volatilisation, permettant d'introduire un tube ou aiguille d'injection, pour porter l'échantillon sensiblement au milieu de la résistance chauffante de la chambre ; de préférence un réseau de fibres réfractaires, notamment en amiante, est alors placé à l'intérieur des spires chauffantes, pour bien distribuer l'échantillon dans la chambre de volatilisation.

A titre d'exemple non limitatif, une forme de réalisation de l'appareil suivant l'invention est décrite ci-après, avec référence aux dessins annexés.

Fig. 1 représente en coupe axiale le four de l'appareil ;

Fig. 2 montre schématiquement le four avec ses accessoires formant le module préparatif de l'appareil ;

Fig. 3 est un schéma de l'ensemble.

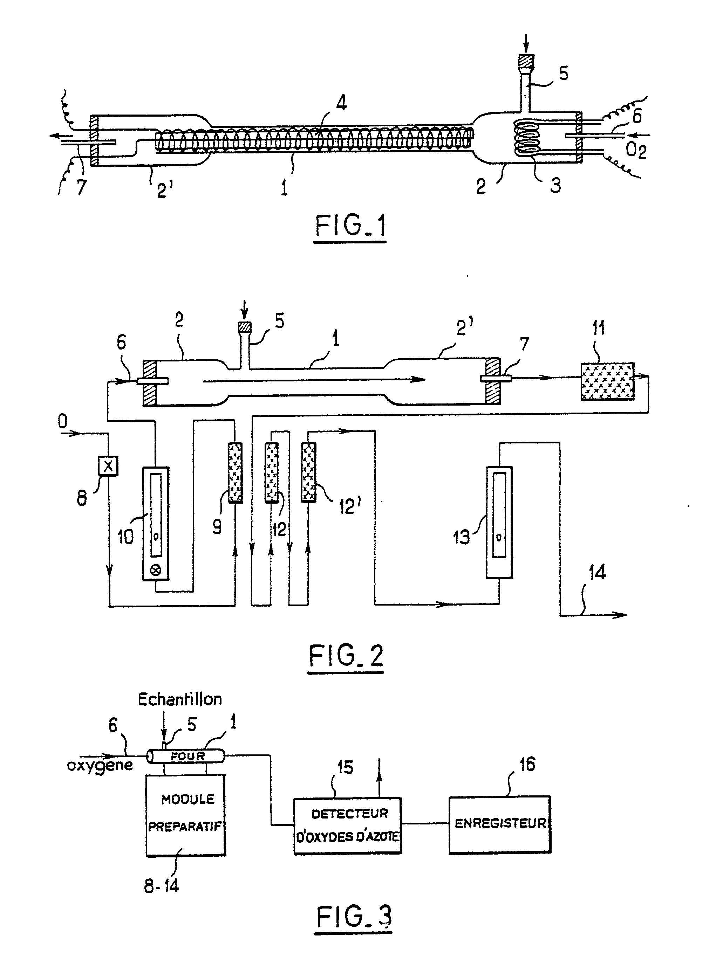

Sur la Figure 1 on voit le four tubulaire en quartz, constitué par un tube 1 terminé à ses extrémités par des parties élargies ou "tulipes" 2 et 2'. Dans la tulipe 2 sont disposées des spires 3 en Pt à 10 % Rh et entre elles sont placées des fibres d'amiante. En outre, la tulipe 2 porte une tubulure latérale 5 par laquelle on introduit l'échantillon liquide au moyen d'une microseringue ; celle-ci est choisie suffisamment longue, pour que sa pointe pénètre au milieu de l'ensemble de spires 3 où l'amiante répartit bien le liquide injecté et nettoie le bout de l'aiguille.

Par le bouchon, fermant à l'arrière la tulipe 2, passe un tube 6 amenant l'oxygène que l'on fait souffler vers l'intérieur du four, tout au long de l'analyse. Une seconde résistance chauffante 4, semblable à 3 enroulée sur une baguette de porcelaine occupe toute la longueur de la partie 1 du four et se termine à l'intérieur de la tulipe 2'. Le dessin montre les terminaisons des deux résistances chauffantes, qui aboutissent à des prises de courant et à des dispositifs de régulation à la manière connue.

Figure 2 montre comment l'oxygène, entrant dans le four en 6, est admis par une vanne 8, puis passe dans une colonne desséchante 9 et par un débitmètre 10, avant d'arriver en 6.

A la sortie du four, en 7, les gaz traversent une couche de silice adsorbante ("Silicagel") du tube interchangeable 11, ensuite les colonnes desséchantes 12-12' et un débitmètre 13 d'où, par une canalisation 14, on les fait passer dans un analyseur d'oxyde d'azote 15 (Fig. 3).

L'ensemble de l'installation analytique est représenté par le schéma de la Figure 3. Le détecteur de NO, repère 15, utilisé était surtout un appareil de chimiluminescence ou de réfractométrie optique. Un enregistreur 16 classique terminait l'ensemble.

## EXEMPLES D'ANALYSES

Les procédé et appareil décrits ont été appliqués à la détermination de l'azote total dans une série de solutions aqueuses de divers composés azotés, ainsi qu'aux eaux résiduelles d'une usine.

L'appareil présentait les caractéristiques suivantes :
- diamètre de chaque spire de la résistance (3) dans la chambre de volatilisation (2) ; environ 5 mm :
- calibre du fil Pt-Rh constituant cette résistance (3) 5/10
- longueur totale de ce fil (3) 28cm
- diamètre intérieur du tube de quartz (1) 8 mm
- diamètre des spires (4) logées dans ce tube ............................. 5 mm
- longueur de la partie (1) du four 14 cm
- longueur totale du fil Pt-Rh dans la partie (1) 90 cm

La température à l'intérieur du four était de 900° à 1000°C.

En (5) on injectait 5 à 20 µl de solution d'échantillon.

Le débit d'oxygène était réglé à environ 13 l/h.

Le temps de réponse était de 25 sec.

Exprimée en azote élémentaire (N), la plage des mesures se situait entre 0,1 et 20 mg/l.

Le Tableau ci-après donne les résultats d'analyse de différents composés azotés : on trouve en moyenne une précision d'environ ± 8 %.

Dans une autre série de mesures analogues, mais après l'addition de 5 g NaCl aux solutions des échantillons, la précision ressort à ± 1,6 %.

TABLEAU

| Composition du mélange | Concentration N mg/l | Résultats | |
|---|---|---|---|
| | | Chimiluminescence | Chromato liquide Colorimétrie |
| $NH_4\ Cl$ <br> + <br> $Na\ NO_2$ | 5 | 4,50 | 4,48 |
| | 10 | 9,35 | 9,69 |
| $NH_4\ Cl$ <br> + <br> DEA | 5 | 4,05 | 4,2 |
| | 10 | 9,25 | 9,55 |
| $Na\ NO_3$ <br> + <br> DEA | 5 | 4,9 | 4,3 |
| | 10 | 10,0 | 10,15 |
| $Na\ NO_3$ <br> + DEA <br> + $NH_4\ Cl$ | 5 | 4,85 | 4,95 |
| | 10 | 9,80 | 9,15 |
| $Na\ NO_3$ <br> DEA | 5 | 5,2 | 4,84 |
| $NH_4\ Cl$ <br> $Na\ NO_2$ | 10 | 10,55 | 10,9 |

Nota : DEA désigne la diéthanolamine.

**Revendications**

1. Procédé de dosage de l'azote dans diverses matières azotées, qui comprend la combustion de ces matières et la détermination de la quantité d'oxydes d'azote formés, un échantillon des composés à doser, volatilisé, étant passé au contact d'une ou de plusieurs masses catalytiques solides (4), métalliques, portées à température élevée, en présence de l'oxygène, de façon à convertir en NO les composés azotés de l'échantillon, la quantité de NO formé étant ensuite déterminée, caractérisé en ce que l'échantillon est préalablement additionné d'un électrolyte ne contenant pas d'azote.

2. Procédé suivant la revendication 1, dans lequel la masse catalytique comprend un métal du groupe VIII de la Classification périodique des Eléments, caractérisé en ce qu'elle est constituée par un métal inoxydable, ferreux, de préférence contenant un ou plusieurs des métaux V, Mo, W, Co, Nb, Ti.

3. Procédé suivant la revendication 1, dans lequel la masse catalytique est constituée par un ou plusieurs métaux du groupe du platine, en particulier Pt-Ir et Pt-Rh, notamment platine rhodié à environ 10% Rh.

4. Procédé suivant une des revendications précédentes, dans lequel la masse catalytique est sous la forme de billes, anneaux, tournures, filaments ou fils, en particulier sous celle de fils servant en même temps de résistance électrique chauffante.

5. Procédé suivant une des revendications précédentes, la masse catalytique étant portée à une température de 800° à 1200°C, de préférence de 900° à 1000°C.

6. Procédé suivant une des revendications précédentes, dans lequel les débits de la vapeur de l'échantillon et de l'oxygène sont tels que le flux gazeux reste au contact de la masse catalytique pendant 0,2 à 3 secondes et - dans le cas des températures préférées de 900° à 1000°C - pendant 0,5 à 2 secondes.

7. Procédé suivant une des revendications précédentes, caractérisé en ce que l'échantillon à analyser est introduit à l'état liquide dans une chambre chauffée (2) où il est volatilisé avant d'être mis au contact des masses catalytiques (4).

8. Procédé suivant une des revendications précédentes, l'échantillon étant à l'état d'une solution aqueuse ou organique, caractérisé en ce que cette solution contient, par litre 0,01 à 0,2 équivalent d'un halogénure de métal alcalin ou alcalino-terreux, en particulier $NaCl$, $KCl$, $CaCl_2$ ou/et $MgCl_2$.

9. Procédé suivant la revendication 8, appliqué à des solutions aqueuses renfermant des amino-alcools, caractérisé en ce que l'on dissout 1 à 10 g de NaCl, et de préférence 3 à 7 g, par litre de solution échantillon.

10. Appareil pour la réalisation du procédé suivant une des revendications 1 à 9, qui comprend un four (1) permettant le chauffage à,ou au delà de, 800°C, muni de moyens de soufflage d'un gaz (6) oxygéné dans ce four contenant une charge (4) de catalyseur solide, métallique, pour l'oxydation des composés azotés, sélectivement, en NO, et qui comporte un dispositif (15) pour le dosage de NO dans le gaz ayant traversé le four, caractérisé par une chambre de volatilisation (2) située entre la charge (4) et les moyens de soufflage (6) et garnie de fibres d'amiante, cette chambre (2) étant munie d'une tubulure latérale (5), pour l'introduction d'un échantillon liquide, dirigée vers les fibres.

11. Appareil suivant la revendication 10, dont le four est une enceinte (1-2-2') chauffée extérieurement, intérieurement, ou à la fois extérieurement et intérieurement.

12. Appareil suivant une des revendications 10 ou 11, pour des dosages de l'azote dans des eaux renfermant des amino-alcools, en environ 10 à 30 secondes, caractérisé en ce que la résistance chauffante en Pt rhodié présente une surface de 5 à 40 $cm^2$.

FIG.1

FIG.2

FIG.3

EP 0 437 405 A1

**Office européen des brevets**

**RAPPORT DE RECHERCHE EUROPEENNE**

Numero de la demande

EP 91 40 0053

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-4 333 735 (J.E. HARDY et al.) * colonne 3, ligne 64 - colonne 5, ligne 68 * | 1,3,5 | G 01 N 31/12 |
| A | | 10 | |
| Y | DE-A-2 434 930 (BECKMAN INSTRUMENTS INC.) * page 10, ligne 20 - page 12; page 21, lignes 20-29; revendications 7-11 * | 1,3,5 | |
| A | DE-A-2 621 616 (SUMITOMO CHEMICAL CO., LTD.) * page 5, ligne 24 - page 6 * | 2,10 | |
| A | FR-A-2 415 299 (SUMITOMO CHEMICAL CO., LTD.) * page 2, ligne 5 - page 3, ligne 3 * | 1,4,10 | |
| A | EP-A-0 075 467 (SUMITOMO CHEMICAL CO., LTD.) * page 3, ligne 18 - page 4, ligne 25 * | 1,3,10 | |
| A | EP-A-0 020 072 (SUMITOMO CHEMICAL CO., LTD.) * page 4, ligne 23 - page 5, ligne 18 * | 1,3,10 | DOMAINES TECHNIQUES RECHERCHES (Int. Cl.5) G 01 N |

Le présent rapport a été établi pour toutes les revendications

| Lieu de la recherche | Date d'achèvement de la recherche | Examinateur |
|---|---|---|
| BERLIN | 19-04-1991 | BRISON O.P. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

8